# EUROPÄISCHE PATENTSCHRIFT

(11) **EP 2 229 850 B1**
(45) Veröffentlichungstag und Bekanntmachung des Hinweises auf die Patenterteilung: **01.05.2013**
(21) Anmeldenummer: 10002477.7
(22) Anmeldetag: 10.03.2010
(51) Int. Cl.: A47J 31/44

(54) **Vorrichtung zum Aufschäumen eines flüssigen Lebensmittels in einem Behältnis**
Device for foaming liquid food in a container
Dispositif de moussage d'un aliment liquide dans un récipient

(30) Priorität: 19.03.2009 DE 102009013938
(43) Veröffentlichungstag der Anmeldung: 22.09.2010
(73) Patentinhaber: FRANKE Kaffeemaschinen AG, 4663 Aarburg (CH)
(72) Erfinder:
(74) Vertreter: Lemcke, Brommer & Partner

(56) Entgegenhaltungen:
- EP-A1- 0 140 841
- EP-A1- 1 440 648
- EP-A1- 2 080 458
- WO-A2-94/23623
- GB-A- 895 848

## Beschreibung

Die Erfindung betrifft eine Vorrichtung zum Aufschäumen eines flüssigen Lebensmittels in einem Behältnis gemäß Oberbegriff des Anspruchs 1.

Zum Aufschäumen eines flüssigen Lebensmittels in einem Behältnis, wie beispielsweise zum Aufschäumen von Milch in einer Tasse, sind Vorrichtungen bekannt, welche einen Dampfgenerator und eine Dampflanze umfassen.

Der mittels des Dampfgenerators erzeugte Dampf wird in die Dampflanze geleitet und dort über mindestens eine Dampfaustrittsöffnung ausgegeben. Die Dampflanze wird in ein mit dem flüssigen Lebensmittel zumindest teilweise gefülltes Behältnis eingeführt, so dass sich die Dampfaustrittsöffnung der Dampflanze zumindest teilweise in dem flüssigen Lebensmittel befindet und mittels des austretenden Dampfes eine Aufschäumung des flüssigen Lebensmittels erzielt wird.

Typischerweise sind solche Vorrichtungen in Kaffeevollautomaten integriert, die neben den zuvor beschriebenen Elementen auch eine Kaffeemaschine zur Erzeugung von Kaffee und Ausgabe über einen separaten Kaffeeauslass aufweisen. Die Dampflanze ist typischerweise manuell schwenkbar an dem Kaffeevollautomaten angeordnet.

Zur Erzeugung eines Getränks wie beispielsweise Cappuccino, welches aufgeschäumte Milch umfasst, wird das Behältnis teilweise mit Milch gefüllt und per Hand an den Kaffeevollautomaten herangeführt, so dass die Dampflanze und insbesondere die Dampfaustrittsöffnung der Dampflanze in die Milch eintaucht. Anschließend wird mittels des Dampfgenerators Dampf aus der Dampfaustrittsöffnung ausgegeben, so dass ein Aufschäumen der Milch erfolgt.

Zur Erzielung eines optimalen Milchschaums ist eine gewisse Erfahrung des Benutzers notwendig, um den Abstand der Dampfaustrittsöffnung zur Milchoberfläche oder die Bewegung der Dampflanze und damit auch der Dampfaustrittsöffnung innerhalb der Milch für die Milchschaumerzeugung zu optimieren.

WO94/23623 offenbart eine Vorrichtung zum Erzeugen von Espresso und Capuccinc, welche eine Dampflanze aufweist, welche Dampflanze hinsichtlich einer horizontal stehenden Drehachse verschwenkbar ist, derart, dass die Dampflanze in eine Gebrauchsstellung zur Ausgabe von Dampf in ein Behältnis und in eine Reinigungsstellung zur Ausgabe von Dampf in eine Abtropfschale verschwenkbar ist.

Der Erfindung liegt die Aufgabe zugrunde, eine Weiterbildung der bekannten Vorrichtung zum Aufschäumen eines flüssigen Lebensmittels in einem Behältnis zu schaffen, welche das Aufschäumen des flüssigen Lebensmittels für den Benutzer vereinfacht und insbesondere eine verbesserte Aufschäumung des flüssigen Lebensmittels unabhängig von der Expertise des Benutzers ermöglicht.

Gelöst ist diese Aufgabe durch eine Vorrichtung gemäß Anspruch 1, vorteilhafte Ausgestaltungen der erfindungsgemäßen Vorrichtung finden sich in Ansprüchen 2 bis 16.

Die erfindungsgemäße Vorrichtung zum Aufschäumen eines flüssigen Lebensmittels in einem Behältnis umfasst somit eine Quelle für ein Aufschäummedium und ein Ausgabeelement für das Aufschäummedium zum zumindest teilweisen Einführen in das Behältnis. Das Ausgabeelement ist mit der Quelle fluidleitend verbunden und weist mindestens eine Fluidaustrittsöffnung auf, so dass Aufschäummedium aus der Fluidaustrittsöffnung in das Behältnis ausgebbar ist.

Wesentlich ist, dass die Vorrichtung mindestens ein Bewegungsmittel aufweist. Das Bewegungsmittel ist derart mit dem Ausgabeelement und/oder mit einer Halterung für das Behältnis verbunden, dass zumindest die Höhenposition der Fluidaustrittsöffnung des Ausgabeelementes in dem Behältnis mittels des Bewegungsmittels änderbar ist.

Im Unterschied zum vorbekannten Stand der Technik weist die erfindungsgemäße Vorrichtung somit ein Bewegungsmittel auf, welches eine Relativbewegung zwischen Ausgabeelement und Behältnis und somit auch zwischen Fluidaustrittsöffnung des Ausgabeelementes und Behältnis ermöglicht. Bei zumindest teilweise in das Behältnis eingetauchtem Ausgabeelement ist zumin, I, dest eine derartige Bewegung mittels des Bewegungsmittels durchführbar, dass die Höhenposition des der Fluidaustrittsöffnung in dem Behältnis veränderbar ist. Mittels des Bewegungsmittels kann somit die zumindest die Eintauchtiefe der Fluidaustrittsöffnung in das Behältnis vergrößert und verkleinert werden, indem die Eintauchtiefe des Ausgabeelementes in das Behältnis verändert wird. Somit ist auch zumindest die Höhenposition, d.h. der vertikale Abstand der Fluidaustrittsöffnung zu der Oberfläche einer sich in dem Behältnis befindlichen Flüssigkeit mittels des Bewegungsmittels änderbar.

Die Relativbewegung zwischen Behältnis und Ausgabeelement wird somit zumindest hinsichtlich einer Höhenänderung durch das Bewegungsmittel ausgeführt. Vorzugsweise wird während des Aufschäumens die Relativbewegung ausschließlich über das Bewegungsmittel ausgeführt. Ebenso liegt es auch im Rahmen der Erfindung, dass unterstützend zu einer manuell durch den Benutzer ausgeführten Relativbewegung zwischen Behältnis und Fluidaustrittsöffnung zusätzlich eine Bewegung oder eine Korrektur der manuellen Bewegung durch das Bewegungsmittel erfolgt.

Die erfindungsgemäße Vorrichtung weist den Vorteil auf, dass herstellerseitig das Bewegungsmittel für einen optimalen Aufschäumvorgang ausgebildet werden kann. Der Benutzer benötigt somit kein oder nur ein geringes Fachwissen hinsichtlich der optimalen Relativbewegung zwischen Ausgabeelement und Behältnis, so dass auch bei fachunkundigen Benutzern mittels der erfindungsgemäßen Vorrichtung ein optimales Aufschäumen erzielt wird.

Typischerweise erfolgt die Aufschäumung eines flüssigen Lebensmittels mit Dampf, insbesondere die Aufschäumung von Milch zur Zubereitung von Milchschaum für Kaffee mittels Wasserdampf. Vorteilhafterweise ist die Quelle daher als Dampfgenerator, vorzugsweise als Wasserdampfgenerator ausgeführt. Insbesondere ist es vorteilhaft, das Ausgabeelement rohartig, vorzugsweise als herkömmliche Dampflanze auszubilden.

Die Fluidaustrittsöffnung ist vorteilhafterweise im Endbereich des Ausgabeelementes angeordnet, d. h. an demjenigen Ende des Ausgabeelementes, mit dem das Ausgabeelement in das flüssige Lebensmittel in dem Behältnis eingetaucht wird.

Untersuchungen der Anmelderin haben ergeben, dass insbesondere das Ein- und Austauchen des Ausgabeelementes in das flüssige Lebensmittel, d. h. die Bewegung des Ausgabeelementes und damit der Fluidaustrittsöffnung senkrecht zur Oberfläche des flüssigen Lebensmittels in dem Behältnis bzw. der Abstand der Fluidaustrittsöffnung zur Oberfläche des flüssigen Lebensmittels in dem Behältnis für einen optimalen Aufschäumvorgang entscheidend ist.

Vorteilhafterweise ist das Bewegungsmittel daher derart mit dem Ausgabeelement und/oder einer Halterung für das Behältnis verbunden, dass das Ausgabeelement und das Behältnis mittels des Bewegungsmittels zumindest auch in vertikaler Richtung relativ zueinander bewegbar sind.

Hierbei liegt es im Rahmen der Erfindung, dass das Behältnis auf eine Oberfläche vor der erfindungsgemäßen Vorrichtung gestellt wird und das Ausgabeelement anschießend in das Behältnis zumindest teilweise eingeführt wird und während des Aufschäumvorgangs aufgrund des Bewegungsmittels eine Relativbewegung zwischen Ausgabeelement und Behältnis erfolgt. Ebenso liegt es im Rahmen der Erfindung, dass die Vorrichtung selbst eine Standfläche für das Behältnis umfasst und/oder dass die Standfläche als Halterung für das Behältnis ausgeführt ist und das Bewegungsmittel mit der Halterung für das Behältnis verbunden ist, so dass das Behältnis durch das Bewegungsmittel bewegbar ist. Es liegen somit mittels des Bewegungsmittels die ausschließliche Bewegung des Ausgabeelementes, die ausschließliche Bewegung einer Halterung für das Behältnis sowie Bewegung sowohl des Ausgabeelementes als auch einer Halterung für das Behältnis im Rahmen der Erfindung.

Eine technisch einfache und kostengünstige Ausgestaltung der erfindungsgemäßen Vorrichtung wird erzielt, wenn lediglich das Ausgabeelement mittels des Bewegungsmittels bewegbar ist und das Behältnis ortsfest relativ zu der erfindungsgemäßen Vorrichtung verbleibt.

Vorteilhafterweise umfasst die Vorrichtung daher eine Ausgabeelementhalterung und das Bewegungsmittel ist zwischen Ausgabeelementhalterung und Ausgabeelement derart angeordnet, dass das Ausgabeelement zumindest vertikal relativ zu der Ausgabeelementhalterung bewegbar ist. Zur Realisierung einer kostengünstigen und robusten Ausführung ist das Bewegungsmittel hierbei vorteilhafterweise als Parallelführung oder Linearführung ausgeführt.

In einer weiteren vorzugsweisen Ausführungsform weist die Vorrichtung mindestens ein als Schwimmer ausgeführtes passives Bewegungsmittel auf. Der Schwimmer ist derart angeordnet, dass er zusammen mit dem Ausgabeelement zumindest teilweise in das flüssige Lebensmittel in dem Behältnis eingeführt wird, so dass die in dem flüssigen Lebensmittel und/oder in dem Schaum auf den Schwimmer wirkende Auftriebskraft ebenfalls auf das Ausgabeelement wirkt. Vorteilhafterweise ist der Schwimmer daher an dem Ausgabeelement angeordnet. Ebenso liegt es im Rahmen der Erfindung, den Schwimmer an einer separaten Halterung, insbesondere separaten Hebeln anzuordnen, und diese zusammenwirkend mit der Ausgabeelementhalterung und/oder dem Ausgabeelement zu verbinden.

Mittels des Schwimmers ist somit ein Abstand zwischen der Oberfläche des flüssigen Lebensmittels in dem Behältnis oder der Grenzfläche zwischen dem erzeugten Schaum und der sich darüber befindenden Luft und dem Ausgabeelement und damit auch der Fluidaustrittsöffnung des Ausgabeelementes vorgebbar. Vorteilhafterweise ist der Schwimmer daher derart ausgeführt, dass die Fluidaustrittsöffnung des Ausgabeelementes während des Aufschäumens für einen vorgegebenen Druck, mit dem die Quelle das Aufschäummedium in das Ausgabeelement leitet, stets in einem etwa konstanten, vorgegebenen Abstand zu der Grenzfläche zwischen dem flüssigen Lebensmittel in dem Behältnis und dem erzeugten Schaum oder zu der Grenzfläche zwischen dem erzeugten Schaum und der sich darüber befindenden Luft angeordnet ist.

Um das Volumen des Schwimmers gering ausführen zu können, ist es vorteilhaft, dass das Ausgabeelement zumindest vertikal bewegbar mittels mindestens eines Haltearms an der Ausgabeelementhalterung angeordnet ist und die Ausgabeelementhalterung ein Gewichtsausgleichselement aufweist, welches derart zusammenwirkend mit dem Haltearm ausgeführt ist, dass das Gewichtsausgleichselement der Gewichtskraft des Schwimmers und des Ausgabeelementes entgegenwirkt. Bei dieser vorzugsweisen Ausgestaltung muss somit nicht das vollständige Gewicht des Ausgabeelementes und des Schwimmers durch die Auftriebskraft des Schwimmers in dem flüssigen Lebensmittel oder dem Schaum kompensiert werden, da zumindest ein Teil des Gewichts durch das Gewichtsausgleichelement kompensiert wird.

Vorzugsweise ist das Gewichtsausgleichelement als Gegengewicht und/oder als Feder ausgeführt.

Vorteilhafterweise umgibt der Schwimmer das Ausgabeelement in dessen Endbereich und die Fluidaustrittsöffnung ist durch den Schwimmer hindurchgeführt. Hierdurch ist eine besonders kompakte Ausbildung von Ausgabeelement und Schwimmer möglich.

Untersuchungen der Anmelderin haben gezeigt, dass abhängig von der Ausgestaltung und Anordnung der Fluidaustrittsöffnung an dem Ausgabeelement aufgrund der Fluidausgabe Auftriebs- oder Abtriebskräfte des Ausgabeelementes in dem flüssigen Lebensmittel erzeugt werden.

Vorteilhafterweise ist die erfindungsgemäße Vorrichtung daher derart ausgeführt, dass zusätzlich zu dem Schwimmer als passives Bewegungsmittel ein aktives Bewegungsmittel vorgesehen ist. In einer vorteilhaften Ausführungsform ist dieses aktive Bewegungsmittel dadurch realisiert, dass die Vorrichtung eine Drucksteuereinheit umfasst, welche derart zusammenwirkend mit der Quelle ausgebildet ist, dass mindestens zwei verschiedene Druckwerte vorgebbar sind, mit denen die Quelle das Aufschäummittel an das Ausgabeelement abgibt und somit das flüssige Lebensmittel mit mindestens zwei verschiedenen Druckwerten durch das Aufschäummedium beaufschlagbar ist. Weiterhin ist die Fluidaustrittsöffnung derart ausgestaltet und an dem Ausgabeelement angeordnet, dass bei Fluidaustritt in dem flüssigen Lebensmittel eine Auftriebs- oder Abtriebskraft des Ausgabeelementes durch das austretende Fluid erzeugt wird.

Durch Wechsel zwischen den mindestens zwei verschiedenen Druckwerten werden somit unterschiedliche Auftriebs- oder Abtriebskräfte erzeugt, so dass eine Auf- und Abbewegung des Ausgabeelementes lediglich über Änderung des Drucks erfolgt. Eine solche Auf- und Abbewegung ist vorteilhaft, wenn eine zumindest teilweise Vermischung zwischen Schaum und flüssigem Lebensmittel während des Aufschäumvorgangs gewünscht ist.

Vorzugsweise wird eine Auftriebskraft erzeugt, da ein nachfolgendes wiederabsinken des Ausgabelementes durch die Gewichtskraft des Ausgabeelementes unterstützt wird.

Die Drucksteuereinheit ist vorteilhafterweise daher derart ausgeführt, dass automatisch ein zyklischer Wechsel zwischen den mindestens zwei verschiedenen Druckwerten erfolgt. Ebenso liegt es im Rahmen der Erfindung, dass der Benutzer über eine Bedieneinheit der Drucksteuereinheit die gewünschten Druckwerte vorgibt und somit der Benutzer indirekt durch Vorgabe der Druckwerte die Auf- und Abbewegung des Ausgabelementes in dem flüssigen Lebensmittel steuert.

In einer weiteren vorzugsweisen Ausführungsform weist die erfindungsgemäße Vorrichtung mindest ein aktives Bewegungselemet auf, welches derart ausgeführt ist, dass mittels des aktiven Bewegungselements eine Relativbewegung zwischen Ausgabelement und Behältnis vorgebbar ist, insbesondere eine zumindest auch vertikale Relativbewegung zwischen Ausgabelement und Behältnis.

Durch das aktive Bewegungselement ist somit nicht nur ein konstanter Abstand der Fluidaustrittsöffnung zu der Flüssigkeitsoberfläche oder der Oberfläche des erzeugten Schaums vorgebbar, sondern eine beliebige Bewegung des Ausgabelementes und damit auch der Fluidaustrittsöffnung zumindest hinsichtlich der Höhenposition in dem Behältnis.

Vorzugsweise umfasst die Vorrichtung weiterhin mindestens einen Sensor zur Detektion der Flüssigkeitsoberfläche und/oder der Oberfläche des erzeugten Schaums sowie eine Bewegungssteuerungseinheit. Die Bewegungssteuerungseinheit ist mit dem Sensor und mit dem aktiven Bewegungselement derart verbunden, dass die Bewegung des Ausgabelementes abhängig von den Messdaten des Sensors steuerbar ist. Bei dieser vorzugsweisen Ausführungsform kann herstellerseitig somit eine Bewegung des Ausgabeelementes und damit auch der Fluidaustrittsöffnung relativ zur Oberfläche des flüssigen Lebensmittels und/oder der Oberfläche des erzeugten Schaums vorgegeben werden.

Insbesondere ist es vorteilhaft, herstellerseitig verschiedene Bewegungsformen vorzugeben, so dass der Benutzer je nach Art des erwünschten Schaums bzw. Art, Temperatur und Viskosität des aufzuschäumenden flüssigen Lebensmittels ein hierfür optimiertes, herstellerseitig in der Bewegungssteuerung vorgegebenes Bewegungsprogramm auswählt und/oder das abhängig von weiteren Sensoren wie beispielsweise Temperatursensoren zur Messung der Temperatur des flüssigen Lebensmittels ein optimiertes Bewegungsprogramm ausgewählt wird.

Weiterhin ist es vorteilhaft, dass mittels des aktiven Bewegungsmittels zusätzlich eine horizontale, insbesondere eine kreisförmige Bewegung zwischen Ausgabelement und Behältnis vorgebbar ist. Durch die horizontale Bewegung des Ausgabelementes ist eine durch Mischung des flüssigen Lebensmittels in dem Behältnis erzielbar und es ist darüber hinaus gewährleistet, dass der gesamte Oberflächenbereich des flüssigen Lebensmittels in dem Behältnis mit Aufschäummedium beaufschlagt wird.

Zur Vorgabe der Bewegung des Ausgabelementes mittels des aktiven Bewegungsmittels ist es vorteilhaft, dass die Vorrichtung eine Steuereinheit zur Steuerung des aktiven Bewegungsmittels aufweist, wobei die Steuereinheit eine Speichereinheit umfasst, zum Abspeichern eines Bewegungsablaufes des aktiven Bewegungsmittels.

Auch bei Verwendung eines aktiven Bewegungsmittels wird eine besonders kostengünstige und robuste Ausgestaltung der erfindungsgemäßen Vorrichtung dadurch realisiert, dass die Vorrichtung eine Ausgabelementhalterung umfasst, an der das Ausgabelement mittels des aktiven Bewegungsmittels bewegbar angeordnet ist.

Vorzugsweise umfasst die Vorrichtung mindestens einen Sensor zur Erfassung einer manuellen Bewegung des Ausgabelementes durch den Benutzer. Der Sensor ist mit der zuvor genannten Steuereinheit derart zusammenwirkend ausgeführt, dass bei manueller Bewegung des Ausgabelementes diese Bewegung in der Speichereinheit der Steuereinheit abgespeichert wird, zumindest hinsichtlich einer Vertikalbewegung des Ausgabelementes.

Besonders vorteilhaft ist es, wenn die Bewegung sowohl hinsichtlich einer Vertikalbewegung als auch einer horizontalen und/oder einer kombinierten horizontalen und vertikalen Bewegung des Ausgabelementes abgespeichert wird. In dieser vorteilhaften Ausgestaltungsform ist es somit möglich, dass der Benutzer oder werkseitig ein Fachmann in einfacher Weise eine Bewegung des Ausgabelementes programmiert, welche später durch den Benutzer aus der Speichereinheit abrufbar ist, so dass das Ausgabelement durch das Bewegungsmittel durch entsprechende Steuerung der Steuereinheit die zuvor abgespeicherte Bewegung ausführt.

Die Fluidaustrittsöffnung ist vorzugsweise im Endbereich des Ausgabelementes angeordnet. Das Ausgabelement kann hierbei zur robusten und kostengüsntigen Ausführung rohrartig ausgebildet sein, sodass sich am unteren Ende des Ausgabelementes die Fluidaustrittsöffnung befindet.

Insbesondere ist es jedoch vorteilhaft, mehrere Fluidaustrittsöffnungen auch seitlich im Endbereich des Ausgabelementes anzuordnen und derart auszuführen, dass das Aufschäummedium aus den Fluidaustrittsöffnungen in einem vorgegebenen Winkel zur dem Ausgabelement austritt.

Vorzugsweise werden hierbei die Fluidaustrittsöfffnungen derart ausgebildet und angeordnet, dass bei Ausgabe des Aufschäummediums eine Auftriebskraft des Ausgabelementes erzeugt wird. Hierdurch ist es wie zuvor beschrieben möglich, durch Änderung des Druckes eine Auf- und Abbewegung des Ausgabelementes zu erzeugen.

Zur einfacheren Reinigung wird das Ausgabelement vorzugsweise lösbar an der Ausgabelementhalterung angeordnet. Hierbei ist insbesondere die lösbare Befestigung des Ausgabelementes mittels eines Bajonettverschlusses an der Ausgabelementhalterung vorteilhaft.

Bei Befestigung des Ausgabelementes an einer Ausgabelementhalterung ist vorteilhafterweise das Ausgabelement nach vorne und/oder nach oben von der Vorrichtung manuell schwenkbar angeordnet. Dies ermöglich ein einfacheres Anordnen des Behältnisses, da zunächst das Ausgabelement nach vorne bzw. oben weggeschwenkt wird und anschließend zusammen mit dem Behältnis das Ausgabelement zurückgeschwenkt wird, so dass nach Zurückschwenken das Behältnis auf der zugeordneten Stellfläche steht und sich das Ausgabelement zumindest teilweise in dem Behältnis befindet. Insbesondere ist es vorteilhaft, wenn das Ausgabeelement in der Arbeitsstellung lösbar einrastet.

In einer weiteren vorzugsweisen Ausführungsform ist an dem Ausgabelement eine Lichtquelle angeordnet, sodass während des Aufschäumvorgangs das flüssige Lebensmittel und/oder der Schaum beleuchtet wird. Dies ermöglicht einerseits eine gute Kontrolle des Aufschäumvorgangs durch den Benutzer und andererseits wird hierdurch ein ansprechender optischer Effekt erzielt. Die Lichtquelle kann eine herkömmliche Lichtquelle, wie beispielsweise eine Glühlampe oder eine LED sein, ebenso ist auch eine außerhalb des flüssigen Lebensmittels angeordnete Lichtquelle denkbar, deren Licht mittels eines Lichtleiters zu dem in das flüssige Lebensmittel eintauchenden Ende des Ausgabelementes geführt wird und dort aus dem Lichtleiter austritt.

Das Ausgabeelement kann aus den an sich bei Kaffeevollautomaten bekannten Materialien wie beispielsweise Metall oder verchromtes Metall bestehen, ebenso ist die Ausführung des Ausgabeelementes aus Glas denkbar. Insbesondere bei Kombination mit einer Lichtquelle ist die Ausführung des Ausgabeelementes aus Glas zur Erzielung eines besonderen optischen Effektes vorteilhaft.

Um ein optimiertes Aufschäumen zu erreichen, wird dem Aufschäummedium vorteilhafterweise Luft zugeführt. In einer vorteilhaften Ausführungsform weist das Ausgabelement daher eine Luftzuführleitung auf, welche eine Einsaugöffnung außerhalb des in das flüssige Lebensmittel eintauchenden Bereichs des Ausgabeelementes aufweist. Durch diese Einsaugöffnung wird Luft eingesaugt und dem Aufschäummedium beim oder in Strömungsrichtung vor Austritt aus der Fluidaustrittsöffnung zugeführt. Diese Ausführung ist insbesondere bei Verwendung von Wasserdampf als Aufschäummedium vorteilhaft.

Die Luftzuführung ist vorteilhafterweise derart ausgeführt, dass die Luft aufgrund der Fluidströmung mittels des Venturi-Effekts angesaugt wird.

Ebenso liegt es im Rahmen der Erfindung, die Luft aktiv mittels eines Gebläses oder eines Luftdruckgenerators zuzuführen.

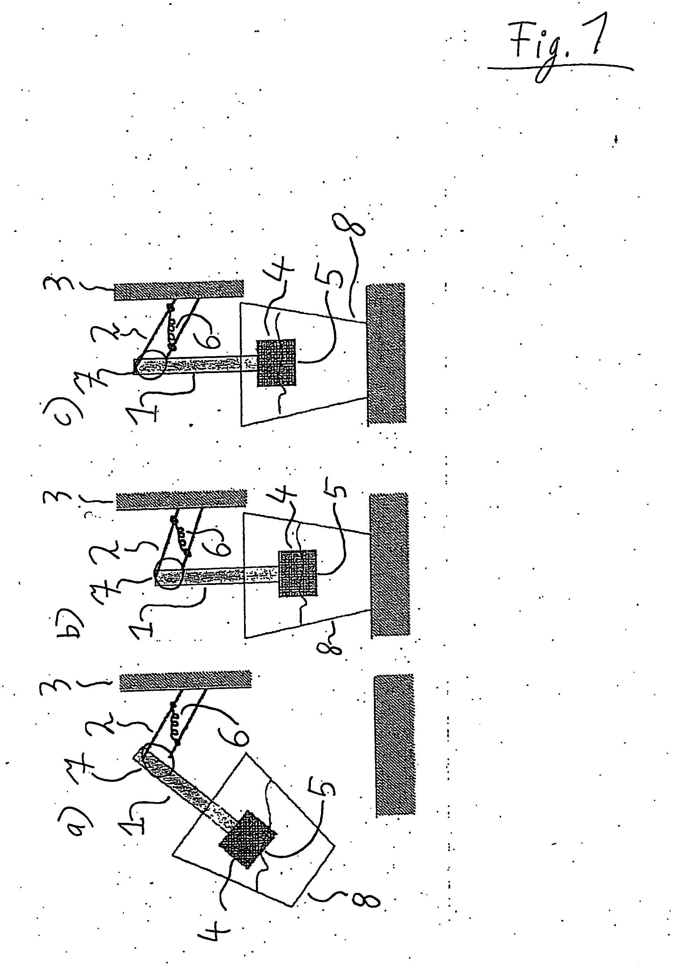

Weitere vorteilhafte Merkmale und Ausgestaltungen der erfindungsgemäßen Vorrichtungen werden im Folgenden anhand eines in Figur 1 dargestellten Ausführungsbeispiels erläutert. Dabei zeigt:
- Figur 1a: ein Ausführungsbeispiel der erfindungsgemäßen Vorrichtung, welche einen Schwimmer als passives Bewegungselement aufweist, wobei in Figur a eine Dampflanze zur Einführung des Behältnisses ausgeschwenkt ist,
- Figur 1b: die Vorrichtung aus Figur 1a während des Aufschäumvorgangs und
- Figur 1c: die Vorrichtung aus den Figuren 1a und 1b nach Beendigung des Aufschäumvorgangs.

Die erfindungsgemäße Vorrichtung weist ein als Dampflanze 1 ausgebildetes Ausgabeelement auf, welche mittels einer Parallelogrammführung 2 an einer als Dampflanzenhalterung 3 ausgebildeten Ausgabeelementhalterung zumindest auch in vertikaler Richtung bewegbar angeordnet ist.

Am unteren Ende der Dampflanze 1 ist ein Schwimmer 4 angeordnet, der die Dampflanze in deren unterem Endbereich umgibt. Die Dampflanze 1 durchdringt den Schwimmer 4 und weist an ihrem unteren Ende eine Dampfaustrittsöffnung 5 auf, so dass bei senkrecht stehender Dampflanze 1 Dampf senkrecht nach unten aus der Dampflanze austritt.

Die Dampflanze 1 ist mit einem nicht dargestellten Dampfgenerator fluidleitend verbunden, so dass in dem Dampfgenerator erzeugter Wasserdampf über die Dampflanze 1 aus der Dampfaustrittsöffnung 5 ausgebbar ist.

Zur teilweisen Kompensation des Gewichts der Dampflanze 1 und des Schwimmers 4 weist die Parallelogrammführung ein Gewichtsausgleichselement 6 auf, welches als Feder ausgeführt ist. Das Gewichtsausgleichselement 6 wirkt der Schwerkraft des Schwimmers 4 und der Dampflanze 1 entgegen, sodass der Schwimmer 4 weniger Auftrieb erzeugen muss und mit einem geringerem Volumen ausgebildet ist, verglichen mit einer Ausführung ohne Gewichtsausgleichselement 6.

Wie in Figur 1a dargestellt, ist die Dampflanze 1 über ein Schwenkgelenk 7 schwenkbar mit der Parallelogrammführung 2 verbunden, so dass die Dampflanze von der Dampflanzenhalterung 3 wegschwenkbar ist, wie in Figur 1 a dargestellt. Hierdurch ist ein einfacheres Einführen eines Behältnisses 8 möglich. Nach Einführung des Behältnisses 8 wird die Dampflanze 1 in die senkrechte Stellung zusammen mit dem Behältnis zurückgeschwenkt, sodass sich die in Figur 1b dargestellte Konstellation ergibt.

Das Behältnis 8 wird hierbei auf eine Standfläche gestellt und die Dampflanze 1 und der Schwimmer 4 tauchen teilweise in eine sich in die in dem Behältnis 8 sich befindende Milch ein.

Vorzugsweise weist das Schwenkgelenk 7 einen Einrastpunkt auf, so dass der Benutzer beim Zurückschwenken der Dampflanze 1 diese in senkrechter Stellung einrastet. Hierdurch ist gewährleistet, dass bei dem nachfolgenden Ausschäumvorgang die Dampflanze nicht ausschert, d.h. in der Darstellung in Figur 1b nicht nach links wegschwenkt.

Zum Herausschwenken der Dampflanze ist die Einrastung vorteilhafterweise als mittels eines Druckknopfes lösbare Einrastung der Dampflanze 1 an dem Schwenkgelenk 7 ausgeführt.

Nachdem der Benutzer das Behältnis wie in Figur 1b dargestellt, angeordnet und die Dampflanze in senkrechter Stellung eingerastet hat, wird der Dampfgenerator gestartet, in dem der Benutzer einen entsprechenden Startknopf an der erfindungsgemäßen Vorrichtung betätigt.

Der Dampfgenerator erzeugt nun mit einem vorgegebenen Dampfdruck Wasserdampf, welcher in die Dampflanze 1 geleitet und aus der Dampfaustrittsöffnung 5 in die Milch in dem Behältnis 8 ausgegeben wird. Die Dampflanze 1 weist an ihrem in Figur 1b oben liegenden Ende eine Lufteinsaugöffnung auf, so dass an dieser Einsaugöffnung der vorbeiströmende Dampf zusätzlich mit Luft vermischt wird und entsprechend an der Dampfaustrittsöffnung 5 die Milch mit einem Luft-Wasserdampfgemisch beaufschlagt wird.

Der Schwimmer 4 ist derart ausgebildet, dass die Dampfaustrittsöffnung 5 während des Aufschäumvorgangs einen vorgegebenen Abstand zur Grenzfläche zwischen dem erzeugten Schaum und der sich darüber befindenden Luft aufweist. Während des Aufschäumvorgangs füllt sich das Behältnis 8 mit Schaum, so dass aufgrund der durch den Schwimmer 4 erzeugten Auftriebskraft die Dampflanze 1 in einer Vertikalbewegung relativ zu dem Behältnis 8 angehoben wird, wobei aufgrund der Parallelogrammführung 2 die Dampflanze 1 hierbei stets senkrecht steht.

Wie in Figur 1c dargestellt, ist somit der Abstand der Dampfaustrittsöffnung 5 zur Grenzfläche des erzeugten Schaums mit der sich darüber befindenden Luft in dem Behältnis 8 stets konstant, unabhängig von der Menge des bereits erzeugten Milchschaums in dem Behältnis 8.

Hierdurch ist eine optimale Aufschäumung der Milch gewährleistet.

In einem weiteren Ausführungsbeispiel weist die in Figur 1 dargestellte erfindungsgemäße Vorrichtung zusätzlich eine nicht dargestellte Dampfdrucksteuereinheit auf. Diese ist mit dem Dampfgenerator zusammenwirkend ausgebildet, sodass zwei verschiedene Dampfdruckwerte durch die Dampfdrucksteuereinheit vorgebbar sind.

In diesem Ausführungsbeispiel kann der Benutzer über entsprechende Tasten an der erfindungsgemäßen Vorrichtung wählen, ob er Milchschaum, d. h. ein Schichtsystem mit zuunterst verbleibender Restmilch und sich darüber befindenden Milchschaum oder ein Milch/Milchschaumgemisch wünscht.

Wählt der Benutzer "Milchschaum" so erfolgt der Aufschäumvorgang wie zuvor beschrieben.

Wählt der Benutzer hingegen "Milch/Milchschaumgemisch" so steuert die Dampfdrucksteuereinheit den Dampfgenerator derart, dass in zyklischen Wechsel Dampf mit zwei unterschiedlichen Dampfdruckwerten aus der Dampfaustrittsöffnung 5 der Dampflanze 1 ausgegeben wird. Hierdurch werden unterschiedliche Auftriebskräfte erzeugt, wohingegen die Auftriebskraft des Schwimmers 4 und die Gewichtskompensation durch das Gewichtsausgleichselement 6 konstant sind. Durch den zyklischen Wechsel des Dampfdrucks erfolgt somit eine Auf- und Abbewegung der Dampflanze 1 und des Schwimmers 4 in dem Behältnis 8, wodurch eine Vermischung von Milch und Milchschaum erzielt wird.

## Patentansprüche

1. Vorrichtung zum Aufschäumen eines flüssigen Lebensmittels in einem Behältnis (8), insbesondere zum Aufschäumen von Milch,
umfassend eine Quelle für ein Aufschäummedium und ein Ausgabeelement (1) für das Aufschäummedium, zum zumindest teilweisen Einführen in das Behältnis (8),
wobei das Ausgabeelement (1) mit der Quelle fluidleitend verbunden ist und mindestens eine Ftuidaustrittsöffnung (5) aufweist, zum Ausgeben des Aufschäummediums in das Behältnis (8),
**dadurch gekennzeichnet,**
**dass** die Vorrichtung mindestens ein Bewegungsmittel aufweist, welches derart mit dem Ausgabeelement (1) und/oder mit einer Halterung für das Behältnis (8) zusammenwirkend ausgestaltet ist, dass zumindest die Höhenposition der Fluidaustrittsöffnung des Ausgabeelementes in dem Behältnis (8) mittels des Bewegungsmittels während der Ausgabe des Aufschäummediums änderbar ist und dass das Bewegungsmittel als Schwimmer und/oder als aktives Bewegungsmittel ausgebildet ist.

2. Vorrichtung nach Anspruch 1,
**dadurch gekennzeichnet,**
**dass** die Quelle für ein Aufschäummedium als Dampfgenerator ausgeführt ist, insbesondere als Wasserdampfgenerator.

3. Vorrichtung nach mindestens einem der vorangegangenen Ansprüche,
**dadurch gekennzeichnet,**
**dass** die Vorrichtung eine Ausgabeelementhalterung (3) umfasst und das Ausgabeelement (1) zumindest hinsichtlich der Höhenposition relativ zu der Ausgabeelementhalterung (3) bewegbar an der Ausgabeelementhalterung (3) angeordnet ist, insbesondere mittels einer Parallelogrammführung (2) oder Linearführung.

4. Vorrichtung mindestens nach Anspruch 3,
**dadurch gekennzeichnet,**
**dass** das Ausgabeelement (1) zumindest hinsichtlich der Höhenposition bewegbar mittels mindestens eines Haltearmes an der Ausgabeelementhalterung (3) angeordnet ist und die Ausgabeelementhalterung (3) mindestens ein Gewichtsausgleichselement (6) aufweist, welches derart zusammenwirkend mit dem Haltearm ausgeführt ist, dass das Gewichtsausgleichselement (6) der Gewichtskraft des Ausgabeelementes und/oder des Haltearmes entgegenwirkt, insbesondere,
**dass** das Gewichtsausgleichselement (6) ein Gegengewicht und/oder eine Feder ist.

5. Vorrichtung nach mindestens einem der vorangegangenen Ansprüche,
**dadurch gekennzeichnet,**
**dass** die Vorrichtung mindestens ein als Schwimmer (4) ausgeführtes Bewegungsmittels aufweist, zur Erzeugung einer Auftriebskraft bei Eintauchen des Schwimmers in das flüssige Lebensmittel,
insbesondere, dass der Schwimmer (4) an dem Ausgabeelement (1) angeordnet ist.

6. Vorrichtung nach Anspruch 4,
**dadurch gekennzeichnet,**
**dass** der Schwimmer (4) derart ausgeführt ist, dass die Fluidaustrittsöffnung (5) des Ausgabeelementes (1) während des Aufschäumens für einen vorgegebenen Fluiddruck des Aufschäummediums stets in einem in etwa konstanten, vorgegebenen Abstand zu der Grenzfläche zwischen dem flüssigen Lebensmittel in dem Behältnis (8) und dem erzeugten Schaum und/oder zu der Grenzfläche zwischen dem erzeugten Schaum und der sich darüber befindenden Luft angeordnet ist.

7. Vorrichtung nach mindestens einem der Ansprüche 4 bis 6,
**dadurch gekennzeichnet,**
**dass** der Schwimmer (4) das Ausgabeelement (1) in dessen Endbereich umgibt, insbesondere, dass die Fluidaustrittsöffnung (5) durch den Schwimmer (4) hindurch gerührt ist.

8. Vorrichtung nach mindestens einem der Ansprüche 4 bis 6,
**dadurch gekennzeichnet,**
**dass** die Vorrichtung eine Drucksteuereinheit für die Quelle aufweist, welche derart zusammenwirkend mit der Quelle ausgebildet ist, dass mindestens zwei verschiedene Druckwerte vorgebbar sind, mit denen das flüssige Lebensmittel über das Ausgabeelement (1) mit dem Aufschäummedium beaufschlagbar ist.

9. Vorrichtung nach mindestens einem der vorangegangenen Ansprüche,
**dadurch gekennzeichnet,**
**dass** die Vorrichtung mindestens ein aktives Bewegungselement aufweist, welches derart ausgeführt ist, dass mittels des aktiven Bewegungselementes eine Relativbewegung zwischen Auslgabeelement (1) und Behältnis (8) vorggebbar ist, insbesondere eine zumindest Relativbewegung hinsichtlich der Höhenposition des Auslgabeelementes in dem Behältnis (8) und/oder der Fluidaustrittsöffnung in dem Behältnis (8).

10. Vorrichtung nach Anspruch 9,
**dadurch gekennzeichnet,**
**dass** die Vorrichtung eine Steuereinheit zur Steuerung des aktiven Bewegungsmittels aufweist, insbesondere, dass die Steuereinheit eine Speichereinheit umfasst, zum Abspeichern eines Bewegungsablaufes des aktiven Bewegungsmittels.

11. Vorrichtung nach Anspruch 10,
**dadurch gekennzeichnet,**
**dass** die Vorrichtung mindestens einen Sensor zur Detektion der Flüssigkeitsoberfläche und/oder der Oberfläche des erzeugten Schaums aufweist, wobei die Steuereinheit mit dem Sensor und mit dem aktiven Bewegungselement derart verbunden ist, dass die Bewegung des Ausgabeelementes (1) abhängig von den Messdaten des Sensors steuerbar ist.

12. Vorrichtung nach mindestens einem der Ansprüche 10 bis 11,
**dadurch gekennzeichnet,**
**dass** das aktive Bewegungsmittel derart ausgeführt ist, dass mittels des aktiven Bewegungsmittels zusätzlich eine horizontale, insbesondere eine kreisförmige Bewegung zwischen Ausgabeelement (1) und Behältnis (8) vorgebbar ist.

13. Vorrichtung nach mindestens einem der vorangegangenen Ansprüche 9 bis 12,
**dadurch gekennzeichnet,**
**dass** die Vorrichtung eine Ausgabeelementhalterung (3) umfasst, an der das Ausgabeelement (1) mittels des aktiven Bewegungsmittels bewegbar angeordnet ist.

14. Vorrichtung nach den Ansprüchen 12 und 13,
**dadurch gekennzeichnet,**
**dass** die Vorrichtung mindestens einen Bewegungssensor zur Erfassung einer manuellen Bewegung des Ausgabeelementes (1) umfasst, welcher mit der Steuereinheit derart zusammenwirkend ausgeführt ist, dass bei manueller Bewegung des Ausgabeelementes (1) diese Bewegung in der Speichereinheit der Steuereinheit abspeicherbar ist, zumindest hinsichtlich einer Vertikalbewegung des Ausgabeelementes (1), insbesondere auch hinsichtlich einer horizontalen und/oder kombinierten horizontalen und vertikalen Bewegung des Ausgabeelementes (1).

15. Vorrichtung nach mindestens einem der vorangegangenen Ansprüche,
**dadurch gekennzeichnet,**
**dass** das des Ausgabeelement (1) mehrere Fluidaustrittsöffnungen aufweist, welche derart ausgeführt und an dem Ausgabeelement (1) angeordnet sind, dass das Aufschäummedium in einem vorgegebenen Winkel zu dem Ausgabeelement (1) an den Fluidaustrittsöffnungen austritt.

16. Vorrichtung nach mindestens einem der vorangegangenen Ansprüche,
**dadurch gekennzeichnet,**
**dass** das Ausgabeelement (1) lösbar an der Ausgabeelementhalterung (3) angeordnet ist, insbesondere mittels eines Bajonettverschlusses.

## Claims

1. Device for foaming a liquid foodstuff in a container (8), especially for foaming milk,
comprising a source for a foaming medium and a dispensing element (1) for the foaming medium, to be at least partly introduced into the container (8),
the dispensing element (1) being in fluid-conducting connection with the source and having at least one fluid-outlet opening (5), for dispensing the foaming medium into the container (8),
**characterised in that**
the device has at least one movement means which is arranged to co-operate with the dispensing element (1) and/or with a holding means for the container (8) in such a way that at least the height position of the fluid-outlet opening of the dispensing element in the container (8) can be altered by means of the movement means during the dispensing of the foaming medium, and the movement means is in the form of a float and/or in the form of an active movement means.

2. Device according to claim 1,
**characterised in that**
the source for a foaming medium is in the form of a vapour generator, especially in the form of a steam generator.

3. Device according to at least one of the preceding claims,
**characterised in that**
the device comprises a dispensing element holding means (3), and the dispensing element (1) is arranged on the dispensing element holding means (3) so as to be movable at least in respect of the height position relative to the dispensing element holding means (3), especially by means of a parallelogram guide means (2) or a linear guide means.

4. Device at least according to claim 3,
**characterised in that**
the dispensing element (1) is arranged on the dispensing element holding means (3) so as to be movable at least in respect of the height position by means of at least one holding arm, and the dispensing element holding means (3) has at least one weight-compensating element (6) which is arranged to co-operate with the holding arm in such a way that the weight-compensating element (6) counteracts the weight force of the dispensing element and/or of the holding arm,
the weight-compensating element (6) especially being a counterweight and/or a spring.

5. Device according to at least one of the preceding claims,
**characterised in that**
the device has at least one movement means in the form of a float (4), to generate a buoyancy force when the float is immersed in the liquid foodstuff,
the float (4) especially being arranged on the dispensing element (1).

6. Device according to claim 4,
**characterised in that**
the float (4) is configured in such a way that, during the foaming, for a preset fluid pressure of the foaming medium the fluid-outlet opening (5) of the dispensing element (1) is arranged always at an approximately constant, preset distance from the interface between the liquid foodstuff in the container (8) and the generated foam and/or from the interface between the generated foam and the air located thereabove.

7. Device according to at least one of claims 4 to 6,
**characterised in that**
the float (4) surrounds the dispensing element (1) in the end region thereof, the fluid-outlet opening (5) especially extending through the float (4).

8. Device according to at least one of claims 4 to 6,
**characterised in that**
the device has a pressure control unit for the source, which unit is arranged to co-operate with the source in such a way that it is possible to preset at least two different pressure values with which the liquid foodstuff can be acted upon by the foaming medium by way of the dispensing element (1).

9. Device according to at least one of the preceding claims,
**characterised in that**
the device has at least one active movement element which is configured in such a way that, by means of the active movement element, it is possible to preset a relative movement between dispensing element (1) and container (8), especially an at least relative movement in respect of the height position of the dispensing element in the container (8) and/or of the fluid-outlet opening in the container (8).

10. Device according to claim 9,
**characterised in that**
the device has a control unit for controlling the active movement means, the control unit especially comprising a memory unit for storing a movement sequence of the active movement means.

11. Device according to claim 10,
**characterised in that**
the device has at least one sensor for detecting the surface of the liquid and/or the surface of the generated foam, the control unit being connected to the sensor and to the active movement element in such a way that the movement of the dispensing element (1) is controllable in dependence upon the measured data of the sensor.

12. Device according to at least one of claims 10 and 11,
**characterised in that**
the active movement means is configured in such a way that, by means of the active movement means, it is possible in addition to preset a horizontal movement, especially a circular movement, between dispensing element (1) and container (8).

13. Device according to at least one of preceding claims 9 to 12,
**characterised in that**
the device comprises a dispensing element holding means (3) on which the dispensing element (1) is arranged so as to be movable by means of the active movement means.

14. Device according to claims 12 and 13,
**characterised in that**
the device comprises at least one movement sensor for detecting a manual movement of the dispensing element (1), which sensor is configured to co-operate with the control unit in such a way that, in the event of manual movement of the dispensing element (1), that movement can be stored in the memory unit of the control unit, at least in respect of a vertical movement of the dispensing element (1), especially also in respect of a horizontal movement and/or a combined horizontal and vertical movement of the dispensing element (1).

15. Device according to at least one of the preceding claims,
**characterised in that**
the dispensing element (1) has a plurality of fluid-outlet openings which are configured and arranged on the dispensing element (1) in such a way that the foaming medium is discharged at the fluid-outlet openings at a preset angle with respect to the dispensing element (1).

16. Device according to at least one of the preceding claims,
**characterised in that**
the dispensing element (1) is detachably arranged on the dispensing element holding means (3), especially by means of a bayonet closure.

## Revendications

1. Dispositif de moussage d'un aliment liquide dans un récipient (8), notamment dévolu au moussage du lait,
comprenant une source génératrice d'un agent de moussage et un élément (1) de délivrance dudit agent de moussage, affecté à l'introduction au moins partielle dans ledit récipient (8),
ledit élément de délivrance (1) étant en liaison fluidique avec ladite source et étant pourvu d'au moins un orifice (5) de sortie de fluide, afin de déverser ledit agent de moussage dans ledit récipient (8),
**caractérisé par le fait**
**que** ledit dispositif présente au moins un moyen imprimant des mouvements, qui est conçu pour coopérer avec l'élément de délivrance (1) et/ou avec un support dédié au récipient (8), de telle sorte qu'au moins la position en hauteur de l'orifice de sortie de fluide dudit élément de délivrance, dans ledit récipient (8), puisse être modifiée à l'aide dudit moyen imprimant des mouvements au cours de la délivrance de l'agent de moussage ; et par le fait que ledit moyen imprimant des mouvements est réalisé sous la forme d'un flotteur et/ou d'un moyen actif de mise en mouvement.

2. Dispositif selon la revendication 1,
**caractérisé par le fait**
**que** la source génératrice d'un agent de moussage est réalisée sous la forme d'un générateur de vapeur, notamment d'un générateur de vapeur d'eau.

3. Dispositif selon au moins l'une des revendications précédentes,
**caractérisé par le fait**
**que** ledit dispositif inclut un support (3) de l'élément de délivrance, et ledit élément de délivrance (1) est implanté sur ledit support (3) avec mobilité concernant au moins la position en hauteur vis-à-vis dudit support (3), en particulier au moyen d'un guide (2) à parallélogramme, ou d'un guide linéaire.

4. Dispositif selon la revendication 3,
**caractérisé par le fait**
**que** l'élément de délivrance (1) est installé sur le support (3) dudit élément de délivrance à l'aide d'au moins un bras de retenue, avec mobilité concernant au moins la position en hauteur, et ledit support (3) est pourvu d'au moins un élément (6) d'équilibrage pondéral qui est conçu pour coopérer avec ledit bras de retenue de façon telle que ledit élément (6) d'équilibrage pondéral agisse en opposition la force proportionnelle au poids dudit élément de délivrance, et/ou dudit bras de retenue ; notamment par le fait que ledit élément (6) d'équilibrage pondéral se présente comme un contrepoids et/ou comme un ressort.

5. Dispositif selon au moins l'une des revendications précédentes,
**caractérisé par le fait**
**que** ledit dispositif est doté d'au moins un moyen imprimant des mouvements, réalisé sous la forme d'un flotteur (4), de manière à engendrer une force ascensionnelle lorsque ledit flotteur plonge dans l'aliment liquide ;
notamment par le fait que ledit flotteur (4) est implanté sur l'élément de délivrance (1).

6. Dispositif selon la revendication 4,
**caractérisé par le fait**
**que** le flotteur (4) est réalisé de telle sorte que l'orifice (5) de sortie de fluide de l'élément de délivrance (1) se trouve en permanence au cours du moussage, pour une pression de fluide préétablie de l'agent de moussage, à une distance préétablie sensiblement constante vis-à-vis de la surface marquant la limite entre la mousse générée et l'aliment liquide renfermé par le récipient (8), et/ou vis-à-vis de la surface marquant la limite entre ladite mousse générée et l'air occupant un remplacement sus-jacent.

7. Dispositif selon au moins l'une des revendications 4 à 6,
**caractérisé par le fait**
**que** le flotteur (4) ceinture l'élément de délivrance (1) dans la région extrême de ce dernier ; notamment par le fait que l'orifice (5) de sortie de fluide, traverse ledit flotteur (4) de part en part.

8. Dispositif selon au moins l'une des revendications 4 à 6,
**caractérisé par le fait**
**que** ledit dispositif est équipé d'une unité de commande de pression qui est assignée à la source et est conçue pour coopérer, avec ladite source, de façon telle qu'il soit possible de préétablir au moins deux valeurs de pression différentes par lesquelles l'aliment liquide puisse être sollicité par l'agent de moussage, par l'intermédiaire de l'élément de délivrance (1).

9. Dispositif selon au moins l'une des revendications précédentes,
**caractérisé par le fait**
**que** ledit dispositif est muni d'au moins un élément actif de mise en mouvements, conçu de façon telle qu'un mouvement relatif puisse être préétabli entre l'élément de délivrance (1) et le récipient (8), au moyen dudit élément actif de mise en mouvement, en particulier au moins un mouvement relatif concernant la position en hauteur occupée par ledit élément de délivrance dans ledit récipient (8), et/ou par l'orifice de sortie de fluide dans ledit récipient (8).

10. Dispositif selon la revendication 9,
**caractérisé par le fait**
**que** ledit dispositif est équipé d'une unité de commande dédiée à la commande du moyen actif de mise en mouvement ; notamment par le fait que ladite unité de commande est dotée d'une unité de mémorisation conçue pour mémoriser un déroulement des processus moteurs dudit moyen actif de mise en mouvement.

11. Dispositif selon la revendication 10,
**caractérisé par le fait**
**que** ledit dispositif est équipé d'au moins un détecteur affecté à la détection de la surface du liquide et/ou de la surface de la mousse générée, l'unité de commande étant connectée audit détecteur et à l'élément actif de mise en mouvement, de façon telle que le mouvement de l'élément de délivrance (1) puisse être piloté en fonction des données de mesure dudit détecteur.

12. Dispositif selon au moins l'une des revendications 10 à 11,
**caractérisé par le fait**
**que** le moyen actif de mise en mouvement est réalisé de telle sorte qu'un mouvement horizontal, en particulier un mouvement circulaire, puisse être additionnellement préétabli entre l'élément de délivrance (1) et le récipient (8) à l'aide dudit moyen actif de mise en mouvement.

13. Dispositif selon au moins l'une des revendications 9 à 12 précédentes, **caractérisé par le fait**
**que** ledit dispositif inclut un support (3) de l'élément de délivrance, sur lequel ledit élément de délivrance (1) est implanté avec mobilité à l'aide du moyen actif de mise en mouvement.

14. Dispositif selon les revendications 12 et 13,
**caractérisé par le fait**
**que** ledit dispositif comporte au moins un détecteur de mouvements affecté à la détection d'un mouvement manuel de l'élément de délivrance (1), et conçu pour coopérer avec l'unité de commande de façon telle que, lors d'un mouvement manuel dudit élément de délivrance (1), ce mouvement puisse être mémorisé dans l'unité de mémorisation de ladite unité de commande concernant au moins un mouvement vertical dudit élément de délivrance (1), concernant également, en particulier, un mouvement horizontal et/ou des mouvements combinés horizontal et vertical dudit élément de délivrance (1).

15. Dispositif selon au moins l'une des revendications précédentes,
**caractérisé par le fait**
**que** l'élément de délivrance (1) compte plusieurs orifices de sortie de fluide qui sont réalisés, et disposés sur ledit élément de délivrance (1), de telle sorte que l'agent de moussage sorte, au niveau desdits orifices de sortie de fluide, en décrivant un angle préétabli vis-à-vis dudit élément de délivrance (1).

16. Dispositif selon au moins l'une des revendications précédentes,
**caractérisé par le fait**
**que** l'élément de délivrance (1) est installé de manière libérable sur le support (3) dudit élément de délivrance, en particulier au moyen d'une fermeture de type baïonnette.
